# EUROPEAN PATENT SPECIFICATION

(11) **EP 3 121 421 B1**
(45) Date of publication and mention of the grant of the patent: **06.03.2019**
(21) Application number: 15765033.4
(22) Date of filing: 18.03.2015
(51) Int. Cl.: F02D 11/10, F02D 9/10, F02B 67/06, B62K 11/00, B62J 99/00, F02M 35/16, F01L 1/02, F02B 61/02

(54) **STRADDLED VEHICLE**
GRÄTSCHSITZFAHRZEUG
VÉHICULE DESTINÉ À ÊTRE ENFOURCHÉ

(30) Priority: 20.03.2014 JP 2014059069
(43) Date of publication of application: 25.01.2017
(73) Proprietor: Honda Motor Co., Ltd., Tokyo 107-8556 (JP); Keihin Corporation, Tokyo 163-0539 (JP)
(72) Inventor: NAOI Yasuo, Wako-shi Saitama 351-0193 (JP); ICHIKAWA Tetta, Shioya-gun Tochigi 329-1233 (JP)
(74) Representative: Piésold, Alexander James
(86) International application number: PCT/JP2015/058141
(87) International publication number: WO 2015/141749

(56) References cited:
- JP-A- H07 253 009
- JP-A- H08 175 452
- JP-A- 2010 236 519
- JP-A- 2011 132 895
- JP-A- 2011 132 895
- JP-A- 2011 149 277
- JP-B2- 4 512 025

## Description

The present invention relates to a straddled vehicle in which an opening degree of a throttle valve is controlled by a throttle motor.

In straddled vehicles such as scooter type vehicles, some are put to practical use by detecting an amount of operation of an operating element such as a throttle grip using a sensor and controlling an opening degree of a throttle valve on the basis of the detected value. In this case, a throttle motor is connected to the throttle valve via a speed reduction mechanism, and the throttle motor is controlled based on a detected signal of the sensor by a control unit.

Meanwhile, in the straddled vehicles such as scooter type vehicles, a structure in which an engine is supported below a seat by a vehicle body frame to be vertically swingable, a cylinder part of the engine extends from a crankcase toward a front side of a vehicle body, and an intake passage is connected to an upper surface side of the cylinder part may be adopted. In this case, the throttle valve is disposed in the middle of the intake passage piped along an upper surface of the cylinder part of the engine, and the throttle motor is disposed close to the throttle valve. For this reason, a layout of functional components around the engine, such as a storage box, is easily restricted by the throttle motor. For this reason, a straddled vehicle coping with this has been developed (e.g. see Japanese Unexamined Patent Application, First Publication No. 2011-149277)

In the straddled vehicle described in JP 2011-149277, a front end of the intake passage is bent downward and is connected the upper surface of the cylinder part, and the throttle motor partly overlaps the intake passage in a top view of the vehicle, and is disposed at a position that is sandwiched between the upper surface of the cylinder part and the intake passage in a side view of the vehicle. Thereby, the throttle motor is disposed by effectively applying a dead space between the upper surface of the cylinder part and the intake passage, and the layout of the functional components around the engine is hardly restricted.

JP 2011 132895 A discloses a straddled vehicle capable of arranging a throttle valve drive motor without increasing in size the structure of an internal combustion engine near an intake passage.

In the straddled vehicle in which the engine is mounted on the vehicle body frame such that the cylinder part extends toward the front side of the vehicle body, a chain tensioner that is a component for adjusting the tension of a timing chain in the engine may be disposed such that a part thereof protrudes upward from the upper surface of the cylinder part. In this case, as described above, if the throttle motor is disposed at the position sandwiched between the upper surface of the cylinder part and the intake passage, the throttle motor easily approaches the chain tensioner. For this reason, to avoid the approach of the throttle motor to the chain tensioner, it is necessary to dispose the intake passage at an upper side, and the layout of the functional components around the engine is restricted.

An aspect according to the present invention is directed to providing a straddled vehicle capable of improving a degree of freedom of a layout of functional components around an engine by allowing a throttle motor to be disposed above the engine at a proper interval from a chain tensioner.

An aspect according to the present invention adopts the following constitutions. A straddled vehicle of an aspect according to the present invention includes: an engine mounted to a vehicle body frame such that a cylinder part extends toward a front of a vehicle body; an intake passage configured to extend above the cylinder part from a rear of the vehicle body to the front of the vehicle body and having a front end portion curved downward and connected to an intake port of the cylinder part; a throttle valve provided for the intake passage and configured to adjust an amount of intake air flowing along the intake passage; a throttle motor configured to drive the throttle valve; and a chain tensioner acting as a component configured to adjust a tension of a timing chain in the engine and having a part thereof protruding upward from an upper surface of a cylinder block the cylinder part, wherein the throttle valve is disposed to overlap the upper surface of the cylinder block of the cylinder part in a top view of the vehicle, and the throttle motor is disposed such that, in a side view of the vehicle the throttle motor is located between the upper surface of the engine and the intake passage, in a side view of the vehicle a horizontal line passing a lower end of the throttle motor overlaps the chain tensioner at a position between an upper surface of the engine and the intake passage, an axis portion of the throttle motor is disposed at a position displaced from the chain tensioner in a longitudinal direction of the vehicle, and the throttle motor is disposed between a front wall rising upward from an upper surface of a crankcase of the engine and the chain tensioner in the longitudinal direction of the vehicle.

In this way, since the throttle motor is disposed such that the horizontal line passing the lower end of the throttle motor overlaps the chain tensioner, and the axis portion of the throttle motor is displaced from the chain tensioner in the longitudinal direction, the throttle motor is compactly disposed with efficient use of a space between the upper surface of the engine and the intake passage.

The throttle motor is disposed between a front wall rising upward from an upper surface of a crankcase and the chain tensioner in the longitudinal direction of the vehicle.

Since the throttle motor can be disposed using a small space between the front wall rising upward from the upper surface of the crankcase and the chain tensioner, a height position of the intake passage can be kept lower.

The engine may be vertically swingably supported by the vehicle body frame via a lower front edge of the crankcase.

In this case in which an upper front edge of the engine is vertically swingably supported by the vehicle body frame, a support position of the engine is not close to the intake passage or the throttle motor. For this reason, a disposition space of the throttle motor can be more easily secured.

The throttle motor may be connected to the throttle valve via a deceleration mechanism to enable power transmission, and the deceleration mechanism may be disposed at a side opposite to a maximum protruding part of the chain tensioner across an axis of the intake passage in the top view of the vehicle.

In this case, since the voluminous deceleration mechanism is disposed at the opposite side of the maximum protruding part of the chain tensioner across the axis of the intake passage, protruding portions of the deceleration mechanism and the chain tensioner can be disposed apart from each other. Therefore, the intake passage can be made closer to the upper surface of the engine.

The throttle valve may be disposed above the upper surface of the cylinder part, and the axis portion of the throttle motor may be disposed above the crankcase of the engine.

In this case, since the throttle motor is disposed to be offset to the crankcase side, a front end portion side of the intake passage can be disposed closer to the upper surface of the cylinder part.

The crankcase of the engine may be provided with an exhaust port of a radiator mounted on the crankcase so as to protrude upward, and the throttle motor may be disposed at a position adjacent to the exhaust port at a front side of the vehicle body.

In this case, the throttle motor is compactly disposed using a dead space between the exhaust port of the radiator and the chain tensioner.

At least a part of the throttle motor may be disposed to overlap at least a part of a region excluding the maximum protruding part of the chain tensioner in the top view of the vehicle.

In this case, since a portion of the intake passage from a front end portion connected to the cylinder part to a middle portion at which the throttle motor is disposed is piped to meander in a width direction of the vehicle, the intake passage can be easily set to an optimal pipe length while maintaining a proper interval between the throttle motor and the chain tensioner.

According to the aspect of the present invention, since the throttle motor is disposed such that the horizontal line passing the lower end of the throttle motor overlaps the chain tensioner, and the axis portion of the throttle motor is displaced from the chain tensioner in the longitudinal direction, the throttle motor maintains a proper interval from the chain tensioner, and is compactly disposed between the upper surface of the engine and the intake passage.

Therefore, according to the aspect of the present invention, it is possible to bring the intake passage close to the engine and increase a degree of freedom of a layout of functional components around the engine.
Fig. 1 is a left side view of a straddled vehicle according to an embodiment of the present invention.
Fig. 2 is a right side view in which some components of the straddled vehicle according to the embodiment of the present invention are removed.
Fig. 3 is a top view in which some components of the straddled vehicle according to the embodiment of the present invention are removed.
Fig. 4 is a right side view of a power unit of the straddled vehicle according to the embodiment of the present invention.
Fig. 5 is a top view of the power unit of the straddled vehicle according to the embodiment of the present invention.
Fig. 6 is a perspective view of the power unit portion of the straddled vehicle according to the embodiment of the present invention when viewed from an upper right front side.

Hereinafter, an embodiment of the present invention will be described by way of example on the basis of the drawings. In the drawings used below, an arrow FR is to indicate a front side of a vehicle, an arrow UP is to indicate an upper side of the vehicle, and an arrow LH is to indicate a left side of the vehicle.

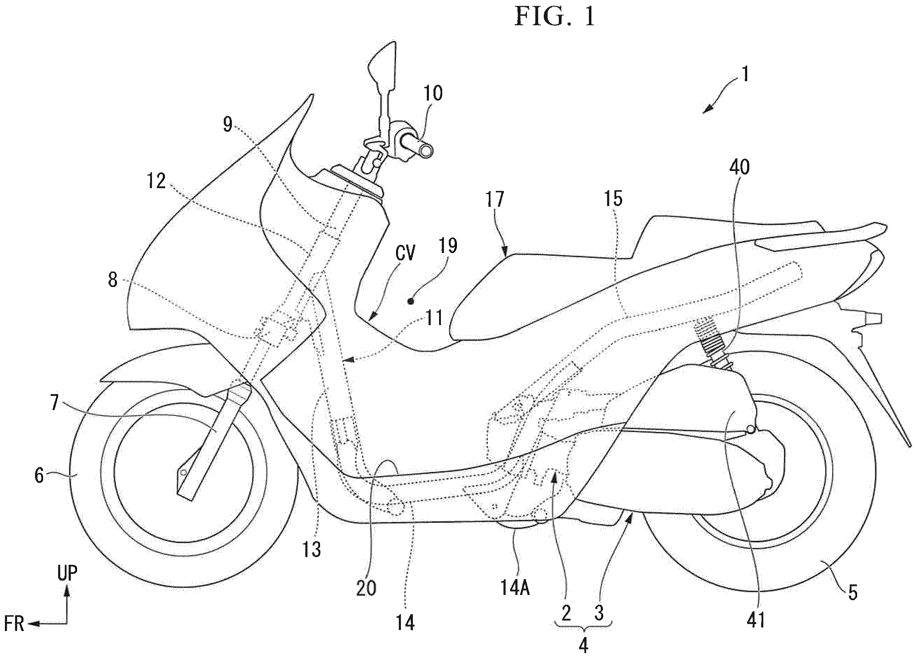

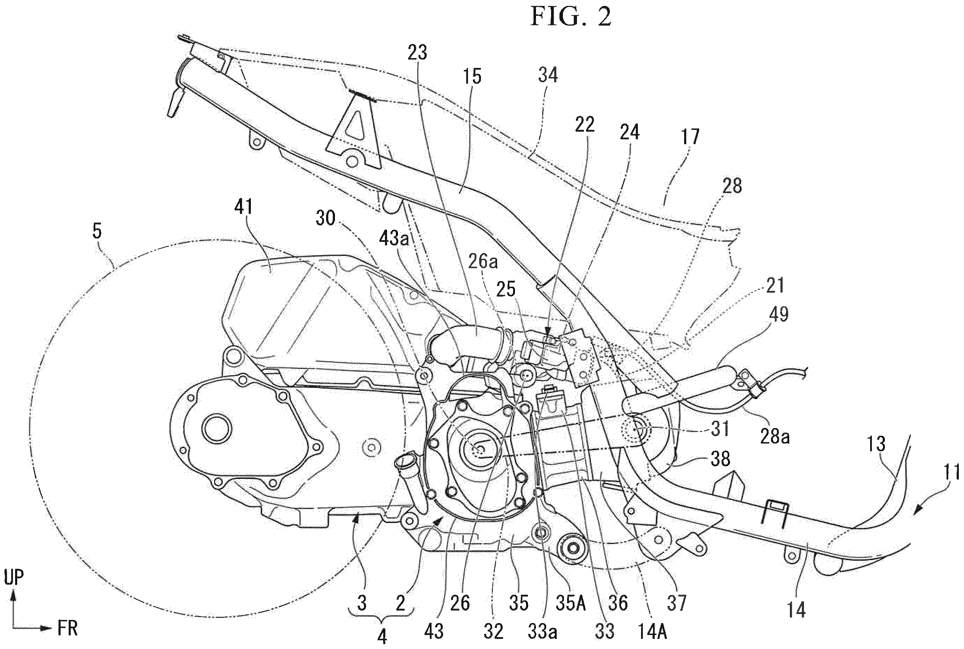

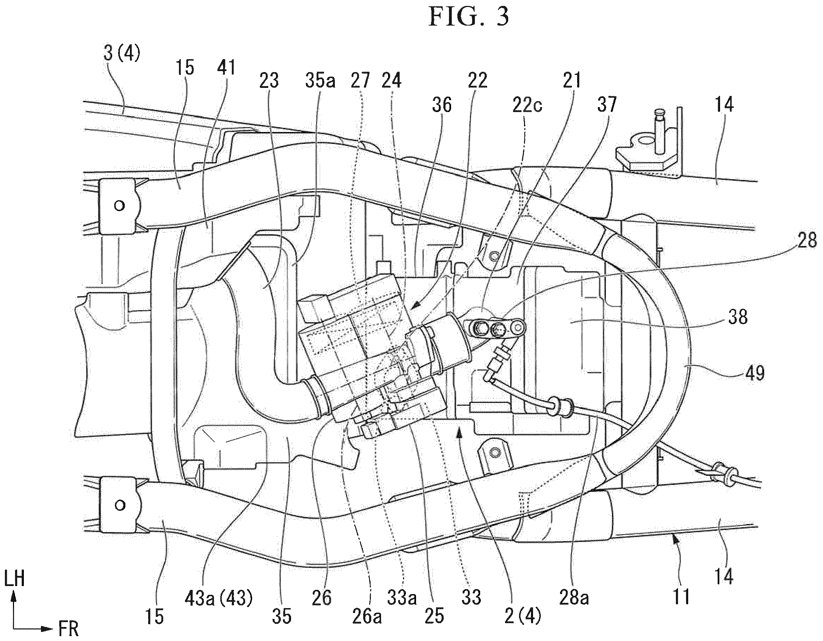

Fig. 1 is a view illustrating a left side of a scooter type motorcycle (a straddled vehicle) 1 as a straddled vehicle according to an embodiment of the present invention, and Fig. 2 is a view illustrating a right side of the rear half of the motorcycle 1 from which some components such as a vehicle body cover CV are removed. Further, Fig. 3 is a view of a central region of the motorcycle 1 from which some components are removed when viewed from above.

The motorcycle 1 is configured such that a steering system including a front wheel 6 and a steering handlebar 10 is supported at a front portion of a vehicle body frame 11, a power unit 4 in which an engine 2 and a transmission 3 are integrally blocked is supported at a central portion of the vehicle body frame 11, and a seat 17 on which an occupant sits is supported at a rear portion of the vehicle body frame 11. The power unit 4 is configured such that a front end side thereof is supported to be vertically swingable by the vehicle body frame 11 and a rear wheel 5 is supported to enable power transmission by a rear end portion thereof. The motorcycle 1 of the present embodiment adopts a so-called unit swing type rear-wheel support structure in which the power unit 4 and the rear wheel 5 are swingably supported by the vehicle body frame 11. A suspension unit 40 is installed between the rear end portion of the power unit 4 and the vehicle body frame 11.

The vehicle body frame 11 is provided with a head pipe 12 that turnably supports a steering shaft 9, a down frame 13 that extends obliquely downward from the head pipe 12 toward a rear portion, a pair of left and right side frames 14 and 14 that are connected to left and right sides of a lower edge of the down frame 13, extend rearward, and then extend obliquely upward toward a rear portion, and a pair of left and right seat frames 15 and 15 that are connected to upper ends of rear portions of the side frames 14 and 14 and extend obliquely upward toward a rear portion at oblique angles different from those of the rear portions of the side frames 14 and 14.

Also, as illustrated in Figs. 2 and 3, a cross frame 49, which is curved in an arcuate shape while being inclined upward toward a front portion and interconnects the left and right side frames 14 and 14, is coupled adjacent to upper end portions of rear portion sides of the left and right side frames 14 and 14. Front end portions of the left and right seat frames 15 and 15 extend to a front side relative to parts connected with the side frames 14 and 14, and front extending ends thereof are connected to a middle portion of the cross frame 49.

Left and right front forks 7 and 7 that rotatably support the front wheel 6 are held on the steering shaft 9, which is supported by the head pipe 12, via a bridge member 8, and the steering handlebar 10 is integrally mounted on an upper end of the steering shaft 9.

A storage box 34 that can store articles such as a helmet is disposed between the left and right seat frames 15 and 15. The storage box 34 is mounted on the left and right seat frames 15 and 15 with an opening thereof directed upward. Thus, a long seat 17 serving as a cover of the storage box 34 is turnably mounted on an upper portion of the storage box 34 using a front end thereof as a turning fulcrum.

As illustrated in Fig. 1, a leg passing space 19 recessed downward in a concave shape by a vehicle body cover CV is provided between the head pipe 12 and the front end of the seat 17. The leg passing space 19 is a space through which legs pass when an occupant gets on or off the motorcycle 1. Footrests 20 and 20 on which an occupant sitting on the seat 17 places his/her legs are provided at both of left and right lower sides of the leg passing space 19. The footrests 20 and 20 are disposed above the left and right side frames 14 and 14 of the vehicle body frame 11. A load applied when the legs are placed is adapted to be supported by the side frames 14 and 14.

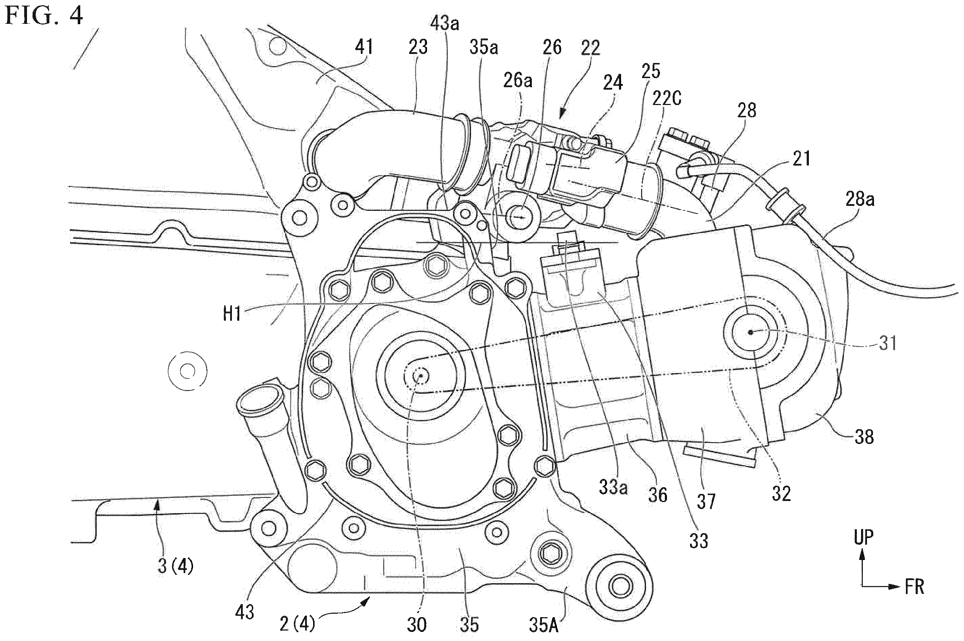

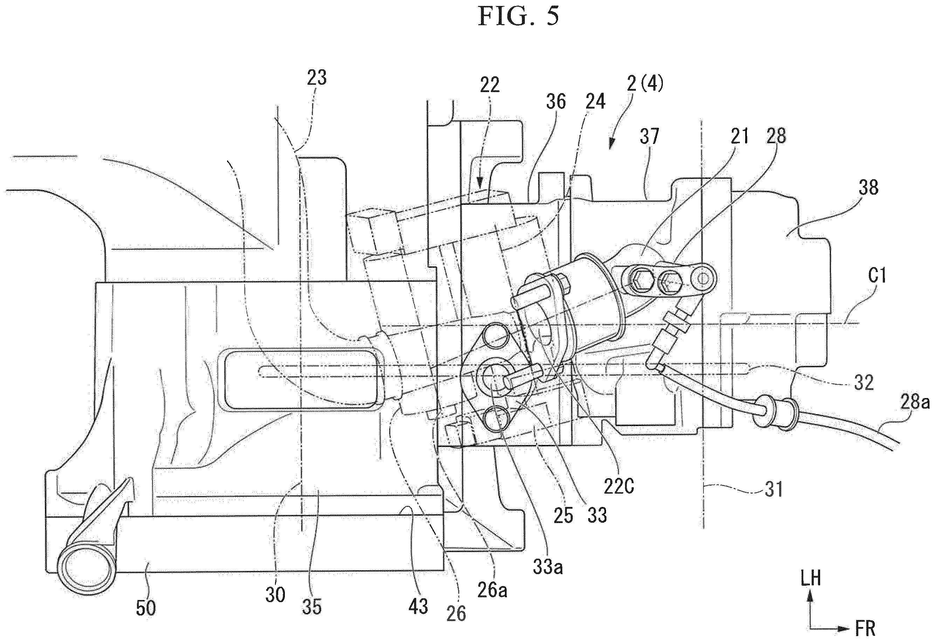

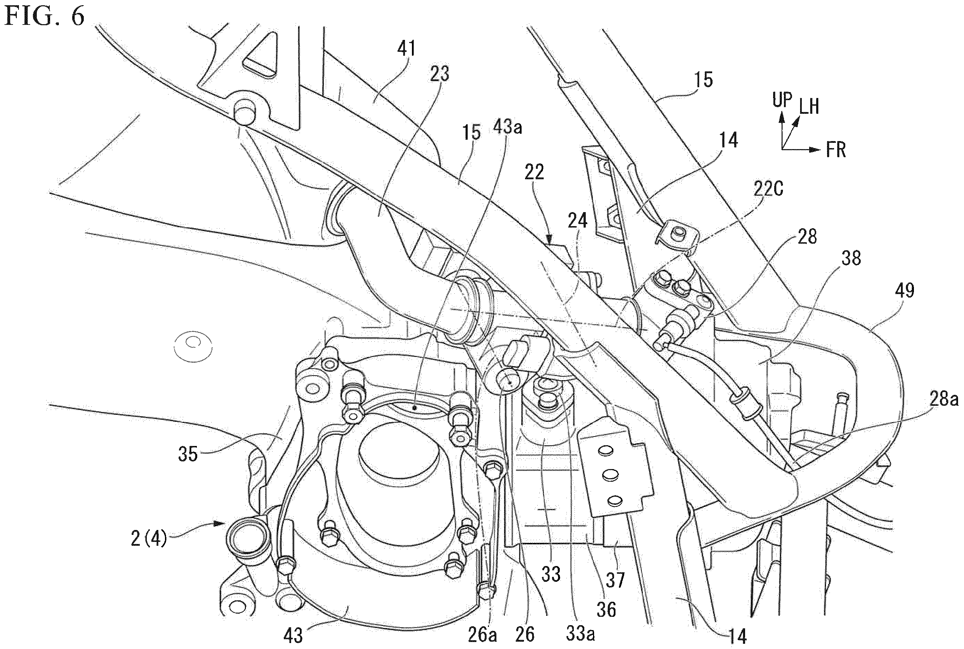

Fig. 4 is a view illustrating a right side of the power unit 4, and Fig. 5 is a view illustrating an upper surface of the power unit 4. Further, Fig. 6 is a view of a part of the power unit 4 and a part of the vehicle body frame 11 when viewed from an oblique right upper side.

As illustrated in Figs. 2 to 6, the power unit 4 is configured such that the engine 2 is disposed at a front side thereof and the transmission 3 is connected at a left rear side of the engine 2. Thus, a support part of the rear wheel 5 is provided at a rear end portion of the transmission 3, and an air cleaner 41 constituting an intake system of the engine 2 is installed above the transmission 3.

The engine 2 is provided with a cylinder block (a cylinder part) 36 in which a piston (not illustrated) is slidably housed, a cylinder head (a cylinder part) 37 that is coupled to one end of the cylinder block 36 and constitutes a combustion chamber (not illustrated) along with the cylinder block 36, a head cover (a cylinder part) 38 which is mounted on the cylinder head 37 and between which and the cylinder head 37 a valve train of intake and exhaust valves are housed, and a crankcase 35 that is coupled to the other end of the cylinder block 36. A crankshaft 30 that converts reciprocating motion of the piston into rotating motion and outputs the rotating motion is housed in the crankcase 35, and a left end portion of the crankshaft 30 is adapted to enable power to be transmitted to an input part of the transmission 3. In the present embodiment, the cylinder block 36, the cylinder head 37, and the head cover 38 constitute the cylinder part of the engine 2.

The valve train of the engine 2 of the present embodiment is configured such that a camshaft 31 coordinating with engine rotation (rotation of the crankshaft 30) is supported by an upper portion of the cylinder head 37 and the intake and exhaust valves are opened and closed with respective given timings by cams (not illustrated) installed on the camshaft 31.

The cylinder part of the engine 2 protrudes toward the front side of the vehicle body while being slightly inclined upward from the crankcase 35. A pair of support pieces 35A protruding toward the front side of the vehicle body are extended and provided at a lower front edge of the crankcase 35. These support pieces 35A are disposed at two places of the crankcase 35 which are spaced in a width direction of the vehicle. One ends of link members 14A and 14A, the other ends of which are connected to the left and right side frames 14 and 14, are turnably connected to these support pieces 35A. A front end side of the power unit 4 including this engine 2 is supported to be vertically swingable by the vehicle body frame 11 via these link members 14A and 14A.

In the state in which the power unit 4 is mounted on the vehicle body frame 11 via the link members 14A and 14A in this way, as illustrated in Figs. 2 and 3, parts of the head cover 38 and the cylinder head 37 of the engine 2 protrude toward the front side of the vehicle body between rising parts of rear end sides of the left and right side frames 14 and 14. Thus, the parts of the head cover 38 and the cylinder head 37 which protrude between the rising parts of the rear end sides of the left and right side frames 14 and 14 are disposed within a space portion surrounded with front edges of the left and right seat frames 15 and 15 and the cross frame 49.

An intake port (not illustrated) is provided at an upper surface side of the cylinder head 37 of the cylinder part, and an exhaust port (not illustrated) is provided at a lower surface side of the cylinder head 37. A front end portion of an inlet pipe (an intake passage) 21 is connected to the intake port, and a connecting tube (an intake passage) 23 is connected to a rear end side of the inlet pipe 21 via a throttle body (an intake passage) 22. A front end portion of an exhaust pipe (not illustrated) is connected to the exhaust port, and a rear end portion of the exhaust pipe is led from a lower side of the power unit 4 to the rear side of the vehicle body, and is connected to a muffler (not illustrated).

The throttle body 22 is provided with a throttle valve 24 (in the figure, only a turning axis of the throttle valve is illustrated) for adjusting opening and closing of an internal passage (an intake passage), and an opening degree sensor 25 detecting an opening degree of the throttle valve 24. Also, a throttle motor 26 that turns and drives the throttle valve 24 and a deceleration mechanism 27 that decelerates rotation of the throttle motor 26 and transmits the decelerated rotation to the throttle valve 24 are installed in the throttle body 22. An opening degree signal of the throttle valve 24 which is detected by the opening degree sensor 25 is input to a signal input part of a control unit (not illustrated) that controls driving of the throttle motor 26. The control unit controls the driving of the throttle motor 26 to receive an operating signal of a throttle operating element (not illustrated) provided for the steering handlebar 10, the opening degree signal of the opening degree sensor 25, and the other various signals to adjust an intake opening degree of the throttle valve 24 to a proper opening degree.

Also, a fuel injection valve 28 that receives a control signal from the control unit to inject a fuel into the passage (the intake passage) is installed adjacent to a connection part of the inlet pipe 21 with the cylinder head 37. In the figure, a reference sign 28a indicates a fuel feed pipe connected to the fuel injection valve 28.

In the present embodiment, the inlet pipe 21, the internal passage of the throttle body 22, and the connecting tube 23 constitute the intake passage of the engine 2.

Meanwhile, the inlet pipe 21 is gently inclined downward from an upper side of the cylinder block 36 toward an upper side of the cylinder head 37, is abruptly curved adjacent to a portion directly above the intake port above the cylinder head 37, and is connected to the intake port. The throttle body 22 connected to a rear end portion of the inlet pipe 21 is disposed across above upper surfaces of the cylinder head 37 and the crankcase 35, and the connecting tube 23 connected to a rear end portion of the throttle body 22 is connected to the air cleaner 41 across above the upper surface of the crankcase 35.

In the present embodiment, as illustrated in Figs. 3 and 5, the throttle valve 24 in the throttle body 22 is disposed at a position at which it overlaps an upper surface of the cylinder block (the cylinder part) 36 in a top view of the vehicle.

The throttle motor 26 integrally assembled to the throttle body 22 is disposed at a position biased to a rear lower side relative to a position of an axis of the throttle valve 24 in the throttle body 22. Here, an axis of each of the throttle valve 24 and the throttle motor 26 is disposed to be nearly orthogonal to an axis 22C of the passage (the intake passage) in the throttle body 22. Also, the deceleration mechanism 27, which decelerates the rotation of the throttle motor 26 to transmit it to the throttle valve 24, is disposed at a position biased to the left side of the vehicle body across the axis 22C of the passage (the intake passage) in the throttle body 22.

Also, the crankshaft 30 in the crankcase 35 and the camshaft 31 above the cylinder head 37 are connected in the engine 2 by a timing chain 32 so as to be able to be interlocked with each other. To be specific, sprockets (not illustrated) are mounted on the crankshaft 30 and the camshaft 31, and the timing chain 32 is stretched to both the sprockets. As illustrated in Fig. 5, the timing chain 32 is disposed at a position biased to the right side of the vehicle across a center line C1 of the cylinder block 36 in the width direction of the vehicle in the top view of the vehicle.

A chain tensioner 33 for adjusting the tension of the timing chain 32 is installed at a position above a passing track of the timing chain 32 of an upper wall of the cylinder block 36. A part of the chain tensioner 33 protrudes upward from the upper surface of the cylinder block 36, and the protruding part is manipulated by, for instance, a tool. Thereby, the chain tensioner 33 is adapted to be able to adjust the tension of the timing chain 32 from the outside of the engine 2. A maximum protruding part 33a protruding to an upper side of the chain tensioner 33 is located nearly at the central portion of the chain tensioner 33 in the top view of the vehicle.

The throttle valve 24 in the throttle body 22 is disposed at a position slightly at a front side relative to the maximum protruding part 33a of the chain tensioner 33 on the cylinder block 36. Also, the throttle motor 26 integrally assembled to the throttle body 22 is located between the upper surface of the engine 2 and the internal passage (the intake passage) of the throttle body 22 in a side view of the vehicle.

Furthermore, as illustrated in Fig. 4, in the side view of the vehicle, a horizontal line H1 passing a lower end of the throttle motor 26 overlaps the chain tensioner 33 in a vertical direction, and an axis portion 26a of the throttle motor 26 is disposed at a position that is offset to a rear side of the chain tensioner 33 by a predetermined amount. Also, the throttle motor 26 is disposed at a position sandwiched between a front wall 35a rising upward from the upper surface of the crankcase 35 and the chain tensioner 33 on the cylinder block 36 in a longitudinal direction of the vehicle.

Furthermore, as illustrated in Figs. 3 and 5, the throttle motor 26 is disposed such that a part thereof overlaps a rear region (a region offset from the maximum protruding part 33a) relative to the maximum protruding part 33a on the chain tensioner 33 in a top view.

Here, the front end portion of the inlet pipe 21 is connected to the intake port at a position that is biased to the left side of the vehicle across the center line C1 of the cylinder block 36 in the width direction of the vehicle within the upper surface of the cylinder head 37. As illustrated in Fig. 5, the inlet pipe 21 and the internal passage of the throttle body 22 are inclined from the connection part of the inlet pipe 21 with the cylinder head 37 at the front end side of the inlet pipe 21 to a rightward inclined rear side across the center line C1. Therefore, the axis 22C of the internal passage of the throttle body 22 in which the throttle valve 24 is disposed is inclined to the rightward inclined rear side in the top view of the vehicle.

However, the axis 22C of the internal passage of the throttle body 22 extends backward across the left side of the maximum protruding part 33a of the chain tensioner 33. Thus, in this state, the deceleration mechanism 27 in the throttle body 22 is disposed at the opposite side of the maximum protruding part 33a of the chain tensioner 33 across the axis 22C of the internal passage in the top view of the vehicle.

Also, as illustrated in Fig. 3, like the front end portion of the inlet pipe 21, the air cleaner 41 to which the rear end portion of the connecting tube 23 is connected is disposed at the left side relative to the maximum protruding part 33a of the chain tensioner 33 in the top view of the vehicle. For this reason, the front end portion of the connecting tube 23 greatly meanders in a horizontal direction at a right side position relative to the center line C1 of the cylinder block 36 in the width direction of the vehicle, and is connected to the rear end portion of the throttle body 22, the axis 22C of the internal passage of which is inclined to the rightward inclined rear side. The connecting tube 23 more greatly meanders in the width direction of the vehicle than a deviation between the connection part for the air cleaner 41 and the connection part for throttle body 22 in the width direction of the vehicle.

Also, as illustrated in Fig. 5, a radiator 50 for cooling an engine coolant is mounted at a right end portion of the crankcase 35 of the engine 2. The radiator 50 is not illustrated in the figures other than Fig. 5. Also, in the figure, a reference sign 43 indicates a radiator base that is integrally provided for the crankcase 35 for mounting the radiator 50. An upper portion of the radiator base 43 protrudes upward relative to an upper surface of a general part of the crankcase 35. An exhaust port 43a for discharging air cooling the radiator 50 to the rear side of the vehicle body through an upper side of a general surface of the crankcase 35 is provided above the radiator base 43.

Also, the throttle motor 26 integrally assembled to the throttle body 22 is located above the upper surface of the general part of the crankcase 35, and is located at a front side relative to the front wall 35a (see Figs. 3 and 4) rising upward from the upper surface of the crankcase 35. Also, the throttle motor 26 is disposed adjacent to the exhaust port 43a of the crankcase 35 at the front side of the vehicle body. Therefore, in the side view of the vehicle, the throttle motor 26 is disposed at a position at which it is adjacent to the exhaust port 43a at the front side of the vehicle body and the chain tensioner 33 at the rear side of the vehicle body.

As described above, in the motorcycle 1 of the present embodiment, since the throttle motor 26 provided for the throttle body 22 is disposed in the side view of the vehicle such that the horizontal line H1 passing the lower end of the throttle motor 26 overlaps the chain tensioner 33 in the vertical direction and the axis portion 26a of the throttle motor 26 is offset from the chain tensioner 33 in the longitudinal direction (offset to the rear side of the chain tensioner 33), the throttle motor 26 can maintain a proper interval from the chain tensioner 33 and be compactly disposed between the upper surface of the engine 2 and the intake passage.

Therefore, in the motorcycle 1 of the present embodiment, it is possible to bring the intake passage close to the engine 2 and increase the degree of freedom of the layout of the functional components around the engine 2, such as the storage box 34.

Thus, in the case of the motorcycle 1 of the present embodiment, since the throttle motor 26 is disposed using the small space held between the front wall 35a rising upward from the upper surface of the crankcase 35 and the chain tensioner 33 in the longitudinal direction of the vehicle body, a height position of the intake passage can be kept lower.

Also, in the case of the motorcycle 1 of the present embodiment, since the power unit 4 is vertically swingably supported by the vehicle body frame 11 at the portions of the support pieces 35A projected to the lower front edges of the crankcase 35, a pivotally supported position of the power unit 4 is separated from the intake passage or the throttle motor 26, compared to the case in which the upper front edge of the power unit 4 is vertically swingably supported by the vehicle body frame 11. Therefore, as this support structure of the power unit 4 is adopted, a disposition space of the throttle motor 26 can be more easily secured.

Furthermore, in the motorcycle 1 of the present embodiment, since the deceleration mechanism 27 in the throttle body 22 is disposed at the opposite side of the maximum protruding part 33a of the chain tensioner 33 across the axis 22A in the throttle body 22 in the top view of the vehicle, the protruding portions of the voluminous deceleration mechanism 27 and the voluminous chain tensioner 33 can be disposed apart from each other. Therefore, as this disposition is adopted, the intake passage can be disposed closer to the upper surface of the engine 2.

Also, in the motorcycle 1 of the present embodiment, since the throttle valve 24 is disposed above the upper surface of the cylinder block 36 and the axis portion 26a of the throttle motor 26 is disposed above the upper surface of the general part of the crankcase 35, the front end side of the intake passage can be disposed closer to the upper surfaces of the cylinder block 36 and the cylinder head 37, compared to the case in which the throttle motor 26 is forcedly disposed in the narrow space above the cylinder block 36. Therefore, as this structure is adopted, this is advantageous in making the intake passage close to the upper surface of the engine 2.

In particular, in the motorcycle 1 of the present embodiment, since the throttle motor 26 is disposed at the position at which it is adjacent to the exhaust port 43a of the radiator 50 projected to a lateral upper side of the crankcase 35 at the front side of the vehicle body and the chain tensioner 33 at the rear side of the vehicle body, the throttle motor 26 can be compactly disposed between the engine 2 and the intake passage with effective use of the dead space between the exhaust port 43a and the chain tensioner 33.

Furthermore, in this case, since a right rear lateral portion of the throttle motor 26 is covered by the exhaust port 43a of the crankcase 35 and the radiator 50, this also has an advantage that the throttle motor 26 can be effectively protected from the outside.

Furthermore, in the motorcycle 1 of the present embodiment, since throttle motor 26 is disposed to overlap a part of the chain tensioner 33 at the position offset from the maximum protruding part 33a of the chain tensioner 33 in the top view, it is possible to meander the intake passage to easily set the intake passage to an optimal pipe length while securing a separated distance between the throttle motor 26 and the chain tensioner 33. Therefore, as this structure is adopted, intake efficiency of the engine 2 can be easily improved.

The present invention is not limited to the aforementioned embodiment, and various changes in design are possible without departing the scope of the present invention as defined by the claims. For example, in the aforementioned embodiment, the throttle motor 26 is integrally assembled to the block of the throttle body 22. However, the throttle motor 26 may be configured independently of the block in which the throttle valve 24 is housed.

Also, the straddled vehicle in the present specification includes any vehicles in which a driver straddles a vehicle body. The straddled vehicle in the present specification includes not only motorcycles (including motorized bicycles and scooter type vehicles) but also three-wheeled vehicles (including front two- and rear one-wheeled vehicles in addition to front one- and rear two-wheeled vehicles) or four-wheeled vehicles.

### [Reference Signs List]

- 1: Motorcycle (straddled vehicle)
- 2: Engine
- 11: Vehicle body frame
- 21: Inlet pipe (intake passage)
- 22: Throttle body (intake passage)
- 22C: Axis
- 23: Connecting tube (intake passage)
- 24: Throttle valve
- 26: Throttle motor
- 26a: Axis portion
- 27: Deceleration mechanism
- 32: Timing chain
- 33: Chain tensioner
- 33a: Maximum protruding part
- 35: Crankcase
- 36: Cylinder block (cylinder part)
- 37: Cylinder head (cylinder part)
- 38: Head cover (cylinder part)
- 41: Air cleaner
- 43a: Exhaust port
- 50: Radiator

## Claims

1. A straddled vehicle (1) comprising:
an engine (2) mounted to a vehicle body frame (11) such that a cylinder part extends toward a front of a vehicle body;
an intake passage (21) configured to extend above the cylinder part from a rear of the vehicle body to the front of the vehicle body and having a front end portion curved downward and connected to an intake port of the cylinder part;
a throttle valve (24) provided for the intake passage and configured to adjust an amount of intake air flowing along the intake passage;
a throttle motor (26) configured to drive the throttle valve; and
a chain tensioner (33) acting as a component configured to adjust a tension of a timing chain in the engine and having a part thereof (33a) protruding upward from an upper surface of a cylinder block (36) of the cylinder part,
wherein the throttle valve is disposed to overlap the upper surface of the cylinder block of the cylinder part in a top view of the vehicle, and
the throttle motor is disposed such that, in a side view of the vehicle the throttle motor is located between an upper surface of the engine and the intake passage, in a side view of the vehicle a horizontal line (HI) passing a lower end of the throttle motor overlaps the chain tensioner at a position between the upper surface of the engine and the intake passage, an axis portion of the throttle motor is disposed at a position displaced from the chain tensioner in a longitudinal direction of the vehicle, and the throttle motor (26) is disposed between a front wall rising upward from an upper surface of a crankcase (35) of the engine and the chain tensioner in the longitudinal direction of the vehicle.

2. The straddled vehicle according to claim 1, wherein the engine is vertically swingably supported by the vehicle body frame via a lower front edge of the crankcase.

3. The straddled vehicle according to claim 1 or 2, wherein:
the throttle motor is connected to the throttle valve via a deceleration mechanism (27) to enable power transmission; and
the deceleration mechanism is disposed at a side opposite to a maximum protruding part of the chain tensioner across an axis of the intake passage in the top view of the vehicle.

4. The straddled vehicle according to any one of claims 1 to 3, wherein:
the throttle valve is disposed above the upper surface of the cylinder block of the cylinder part; and
the axis portion of the throttle motor is disposed above the crankcase of the engine.

5. The straddled vehicle according to any one of claims 1 to 4, wherein:
the crankcase of the engine is provided with an exhaust port (43a) of a radiator (50) mounted on the crankcase so as to protrude upward; and
the throttle motor is disposed at a position adjacent to the exhaust port at a front side of the vehicle body.

6. The straddled vehicle according to any one of claims 1 to 5, wherein at least a part of the throttle motor is disposed to overlap at least a part of a region excluding the maximum protruding part of the chain tensioner in the top view of the vehicle.

## Patentansprüche

1. Spreizsitzfahrzeug (1), umfassend:
einen Motor (2), der an einem Fahrzeugkarosserierahmen (11) derart befestigt ist, dass sich ein Zylinderteil in Richtung einer Vorderseite einer Fahrzeugkarosserie erstreckt;
einen Aufnahmedurchgang (21), der konfiguriert ist, sich über dem Zylinderteil von einer Rückseite der Fahrzeugkarosserie bis zur Vorderseite der Fahrzeugkarosserie zu erstrecken, und der einen vorderen Endabschnitt aufweist, der nach unten gekrümmt und mit einer Ansaugöffnung des Zylinderteils verbunden ist;
eine Drosselklappe (24), die für den Aufnahmedurchgang vorgesehen und konfiguriert ist, eine Menge an Ansaugluft einzustellen, die entlang des Aufnahmedurchgangs strömt;
einen Drosselmotor (26), der konfiguriert ist, die Drosselklappe anzutreiben; und
einen Kettenspanner (33), der als eine Komponente wirkt, die konfiguriert ist, eine Spannung einer Steuerkette im Motor einzustellen, und einen Teil davon (33a) aufweist, der von einer Oberseite eines Zylinderblocks (36) des Zylinderteils nach oben ragt,
wobei die Drosselklappe angeordnet ist, um die Oberseite des Zylinderblocks des Zylinderteils in einer Draufsicht auf das Fahrzeug zu überlappen, und
der Drosselmotor so angeordnet ist, dass in einer Seitenansicht des Fahrzeugs der Drosselmotor zwischen einer Oberseite des Motors und dem Aufnahmedurchgang angeordnet ist, in einer Seitenansicht des Fahrzeugs eine horizontale Linie (H1), die an einem unteren Ende des Drosselmotors vorbeiführt, den Kettenspanner an einer Position zwischen der Oberseite des Motors und dem Aufnahmedurchgang überlappt, ein Achsenabschnitt des Drosselmotors an einer Position angeordnet ist, die vom Kettenspanner in Längsrichtung des Fahrzeugs verschoben ist, und der Drosselmotor (26) zwischen einer Vorderwand, die von einer Oberseite eines Kurbelgehäuses (35) des Motors nach oben steigt, und dem Kettenspanner in Längsrichtung des Fahrzeugs angeordnet ist.

2. Spreizsitzfahrzeug nach Anspruch 1, wobei der Motor über eine untere Vorderkante des Kurbelgehäuses vom Fahrzeugkarosserierahmen vertikal schwenkbar abgestützt ist.

3. Spreizsitzfahrzeug nach Anspruch 1 oder 2, wobei:
der Drosselmotor über einen Verzögerungsmechanismus (27) mit der Drosselklappe verbunden ist, um Kraftübertragung zu ermöglichen; und
der Verzögerungsmechanismus auf einer Seite gegenüber einem maximal vorstehenden Teil des Kettenspanners über einer Achse des Aufnahmedurchgangs in der Draufsicht des Fahrzeugs angeordnet ist.

4. Spreizsitzfahrzeug nach einem der Ansprüche 1 bis 3, wobei:
die Drosselklappe über der Oberseite des Zylinderblocks des Zylinderteils angeordnet ist; und
der Achsenabschnitt des Drosselmotors über dem Kurbelgehäuse des Motors angeordnet ist.

5. Spreizsitzfahrzeug nach einem der Ansprüche 1 bis 4, wobei:
das Kurbelgehäuse des Motors mit einer Auspufföffnung (43a) eines Kühlers (50) versehen ist, der an dem Kurbelgehäuse derart befestigt ist, dass er nach oben ragt; und
der Drosselklappenmotor an einer Position angrenzend an die Auspufföffnung an einer Vorderseite der Fahrzeugkarosserie angeordnet ist.

6. Spreizsitzfahrzeug nach einem der Ansprüche 1 bis 5, wobei mindestens ein Teil des Drosselmotors so angeordnet ist, dass er mindestens einen Teil eines Bereichs überlappt, der den maximal vorstehenden Teil des Kettenspanners in der Draufsicht des Fahrzeugs ausschließt.

## Revendications

1. Véhicule à enfourcher (1) comprenant :
un moteur (2) monté sur une ossature de carrosserie de véhicule (11) de sorte qu'une partie cylindres s'étend vers un avant d'une carrosserie de véhicule ;
un passage d'admission (21) configuré pour s'étendre au-dessus de la partie cylindres à partir d'un arrière de la carrosserie de véhicule jusqu'à l'avant de la carrosserie de véhicule et ayant une portion d'extrémité avant incurvée vers le bas et reliée à un orifice d'admission de la partie cylindres ;
un papillon des gaz (24) prévu pour le passage d'admission et configuré pour ajuster une quantité d'air d'admission s'écoulant le long du passage d'admission ;
un moteur de papillon (26) configuré pour entraîner le papillon des gaz; et
un tendeur de chaîne (33) agissant comme un composant configuré pour ajuster une tension d'une chaîne de distribution dans le moteur et ayant une partie de celui-ci (33a) dépassant vers le haut depuis une surface supérieure d'un bloc-cylindres (36) de la partie cylindres,
dans lequel le papillon des gaz est disposé pour chevaucher la surface supérieure du bloc-cylindres de la partie cylindres dans une vue de dessus du véhicule, et
le moteur de papillon est disposé de sorte que, dans une vue de profil du véhicule le moteur de papillon est situé entre une surface supérieure du moteur et le passage d'admission, dans une vue de profil du véhicule une ligne horizontale (H1) passant par une extrémité inférieure du moteur de papillon chevauche le tendeur de chaîne au niveau d'une position entre la surface supérieure du moteur et le passage d'admission, une portion formant axe du moteur de papillon est disposée au niveau d'une position déplacée par rapport au tendeur de chaîne dans une direction longitudinale du véhicule, et le moteur de papillon (26) est disposé entre une paroi avant montant vers le haut à partir d'une surface supérieure d'un carter (35) du moteur et le tendeur de chaîne dans la direction longitudinale du véhicule.

2. Véhicule à enfourcher selon la revendication 1, dans lequel le moteur est supporté de façon à pouvoir pivoter verticalement par l'ossature de carrosserie de véhicule via un bord avant inférieur du carter.

3. Véhicule à enfourcher selon la revendication 1 ou 2, dans lequel :
le moteur de papillon est relié au papillon des gaz via un mécanisme de ralentissement (27) pour permettre une transmission de puissance ; et
le mécanisme de ralentissement est disposé au niveau d'un côté opposé à une partie saillante maximale du tendeur de chaîne d'un bout à l'autre d'un axe du passage d'admission dans la vue de dessus du véhicule.

4. Véhicule à enfourcher selon l'une quelconque des revendications 1 à 3, dans lequel :
le papillon des gaz est disposé au-dessus de la surface supérieure du bloc-cylindres de la partie cylindres ; et
la portion formant axe du moteur de papillon est disposée au-dessus du carter du moteur.

5. Véhicule à enfourcher selon l'une quelconque des revendications 1 à 4, dans lequel :
le carter du moteur est muni d'un orifice d'échappement (43a) d'un radiateur (50) monté sur le carter afin de dépasser vers le haut ; et
le moteur de papillon est disposé au niveau d'une position adjacente à l'orifice d'échappement au niveau d'un côté avant de la carrosserie de véhicule.

6. Véhicule à enfourcher selon l'une quelconque des revendications 1 à 5, dans lequel au moins une partie du moteur de papillon est disposée pour chevaucher au moins une partie d'une région excluant la partie saillante maximale du tendeur de chaîne dans la vue de dessus du véhicule.
